# EUROPEAN PATENT APPLICATION

(11) **EP 4 215 088 A2**
(43) Date of publication of application: **26.07.2023**
(21) Application number: 22188913.2
(22) Date of filing: 05.08.2022
(51) Int. Cl.: A47J 27/10, A47J 36/16, A47J 43/07, A47J 27/04

(54) **FOOD PROCESSOR**

(30) Priority: 04.01.2022 CN 202220028122 U
(71) Applicant: Guangdong Midea Consumer Electric Manufacturing Co., Ltd., Shunde Foshan, Guangdong 528311 (CN)
(72) Inventor: LI, Hou, Beijiao, Shunde, Foshan, 528311 (CN); GUO, Houcai, Beijiao, Shunde, Foshan, 528311 (CN); MO, Qianhong, Beijiao, Shunde, Foshan, 528311 (CN); WEI, Yudi, Beijiao, Shunde, Foshan, 528311 (CN)
(74) Representative: RGTH

(57) **Abstract**

Disclosed is a food processor. The food processor includes a main machine, a processing cup structure and a heating device. The main machine forms a machining cavity with an opening at an upper end. The processing cup structure includes a processing cup, at least part of the processing cup is detachably installed in the machining cavity from the opening of the machining cavity, and a processing cavity is formed in the processing cup for containing food material. The heating device is provided in the main machine, for heating heat-conducting fluid in the machining cavity, the heated heat-conducting fluid conducting heat into the processing cavity, to at least heat the food material in the processing cavity.

## Description

### TECHNICAL FIELD

The present disclosure relates to the technical field of food processors, and in particular, to a food processor.

### BACKGROUND

The fully automatic wall breaker is very popular among consumers because of its automatic slurry cleaning function. In order to expand the target group, the functions that can be implemented fully automatically are increasingly diverse. However, the fully automatic wall breaker can only automatically add and discharge flowable liquid food materials. For sticky and other non-fluid food materials that need to be heated and smashed, it will cause the difficulty of taking out the finished food materials, making the user's operation and experience unpleasant.

### SUMMARY

The main purpose of the present disclosure is to provide a food processor, which aims to optimize the structure of the existing food processor, to realize processing such as heating and stirring of non-liquid food materials, and improve user experience.

In order to achieve the above objective, the present disclosure provides a food processor structure, including:
a main machine forming a machining cavity with an opening at an upper end of the main machine;
a processing cup structure including a processing cup, at least part of the processing cup being detachably installed in the machining cavity from the opening of the machining cavity, and a processing cavity being formed in the processing cup for containing a food material; and
a heating device provided in the main machine for heating a heat-conducting fluid in the machining cavity, the heat-conducting fluid after heated being able to conduct heat into the processing cavity, so as to at least heat the food material in the processing cavity.

In an embodiment, the processing cup is at least partially submerged in the heat-conducting fluid.

In an embodiment, a bottom wall and/or a side wall of the processing cavity is provided with a liquid passage hole to introduce the heat-conducting fluid in the machining cavity into the processing cavity.

In an embodiment, a steam passage is formed in the food processor, the steam passage is in communication with the machining cavity and the processing cavity, such that after a phase change of the heat-conducting fluid, the heat-conducting fluid in the machining cavity is introduced into the processing cavity, so as to steam and cook the food material in the processing cavity.

In an embodiment, the steam passage is partially formed between the processing cup structure and the machining cavity, and partially formed on the processing cup structure.

In an embodiment, a first air passage hole is formed to run through an outer side wall of the processing cup at an upper end of the processing cup, a first annular air passage gap is formed between the outer side wall of the processing cup and an inner side wall of the machining cavity, and the steam passage includes the first annular air passage gap and the first air passage hole.

In an embodiment, a plurality of first air passage holes are provided and are spaced apart from each other along a circumferential direction of the processing cup; and/or, in a direction from outside to inside, the first air passage hole is inclined downward.

In an embodiment, an annular drainage baffle is provided in the processing cavity, an upper end of the annular drainage baffle is provided on a top wall surface of the processing cavity, a lower end of the annular drainage baffle is spaced from a bottom wall of the processing cavity, and forms a second annular air passage gap communicating with the first air passage hole between an outer side wall of the annular drainage baffle and an inner side wall of the processing cavity, so as to direct a steam flow to a bottom of the processing cavity.

In an embodiment, the processing cup includes:
a cup body with an opening at an upper end of the cup body; and
a cup cover assembly covered on the open end of the cup body to form the processing cavity together with the cup body;
the annular drainage baffle is provided at a lower end of the cup cover assembly and is integrally formed with the cup cover assembly.

In an embodiment, the steam passage is formed on the processing cup structure.

In an embodiment, a bottom of the processing cup is provided with a mounting hole, and the processing cup structure further includes:
a first installation frame provided in the mounting hole; and
a first crushing knife structure, an upper end of the first crushing knife structure being rotatably mounted on the first installation frame and located in the processing cavity for crushing the food material in the processing cavity, a lower end of the first crushing knife structure extending out of the processing cavity to be drivingly connected to a main machine drive assembly;
the steam passage is formed between the first installation frame and the first crushing knife structure.

In an embodiment, the first installation frame includes a center support, a lower end of the center support is provided in the mounting hole, and an upper end of the center support is formed with a first annular protrusion located in the processing cavity and extending upward;
the first crushing knife structure includes a first knife body mounting seat, the first knife body mounting seat is formed with a first annular groove with an opening facing downward, the first knife body mounting seat is rotatably mounted on the center support;
the first annular protrusion is inserted into the first annular groove, a thickness of the first annular protrusion is smaller than a width of the first annular groove, so as to form two vertical annular air passage gaps spaced apart from each other between the first annular protrusion and the first annular groove, a top of the first annular protrusion is spaced apart from a bottom wall of the first annular groove and, so as to form a horizontal annular air passage gap between a top of the first annular protrusion and the bottom wall of the first annular groove, the horizontal annular air passage gap is communicated with the two vertical annular air passage gaps;
the steam passage includes the horizontal annular air passage gap and the two vertical annular air passage gaps.

In an embodiment, an outer side wall of the first annular groove is provided with a plurality of second air passage holes; and/or the first knife body mounting seat further includes an annular guide rib protruding from the outer side wall of the first annular groove and extending laterally to guide the steam flow laterally.

In an embodiment, an annular crimping protrusion is protruded on a side surface of the center support, and a first sealing ring is provided between the annular crimping protrusion and the bottom wall of the processing cavity.

In an embodiment, the first installation frame includes:
a center support, a lower end of the center support being formed with a first connection portion provided in the mounting hole, an upper end of the center support being located in the processing cavity; and
a support frame, an upper end of the support frame being formed with a second connection portion provided in the mounting hole, the second connection portion being detachably connected to the first connection portion, the support frame being for at least supporting and installing the processing cup in the machining cavity;
the first crushing knife structure is rotatably mounted on the upper end of the center support.

In an embodiment, a bottom of the processing cup is provided with a through hole, and the processing cup structure further includes:
a second installation frame provided in the processing cavity and corresponding to the through hole; and
a second crushing knife structure rotatably mounted on the second installation frame, an upper end of the second crushing knife structure being for extending upwards from the processing cavity and being drivingly connected to an external drive device;
the steam passage is formed on the second installation frame.

In an embodiment, the second installation frame includes:
a through hole bracket provided in the processing cavity, the through hole bracket being formed with a second annular protrusion around a periphery of the through hole, an outer side wall of the second annular protrusion being provided with a third air passage hole; and
a positioning bracket provided in the processing cavity, the second crushing knife structure being rotatably mounted on the positioning bracket, a lower end of the positioning bracket being formed with a buckle groove with an opening downward, a top wall surface of the buckle groove being in contact with an upper end surface of the second annular protrusion, a groove width of the buckle groove being larger than an outer diameter of the second annular protrusion, so as to form a third annular air passage gap between the outer side wall of the second annular protrusion and an inner side wall of the buckle groove;
the steam passage includes the through hole, an inner cavity of the second annular protrusion and the third annular air passage gap.

In an embodiment, the processing cup includes:
a cup body with an opening at an upper end of the cup body; and
a cup cover assembly at least covered on the open end of the cup body to form the processing cavity with the cup body.

In an embodiment, the cup cover assembly includes:
a handle frame formed with an opening in a middle of the handle frame;
a cup mouth sealing ring provided on a lower end surface of the handle frame, a lower end surface of the cup mouth sealing ring being in sealing contact with a lip of the opening of the processing cavity and a lip of the opening of the machining cavity respectively;
a lower handle cover provided on the lower end surface of the cup mouth sealing ring, the lower handle cover being located between the cup body and the machining cavity; and
a cup cover covered on the opening of the handle frame.

In an embodiment, the cup cover assembly includes a steam valve communicating with the processing cavity, and the steam valve is provided with an air outlet hole for discharging steam in the processing cavity.

In an embodiment, the main machine includes a main machine drive assembly for stirring the food material in the machining cavity;
the main machine drive assembly includes a first coupling portion extending into the machining cavity;
the processing cup structure further includes a third crushing knife structure rotatably installed in the processing cavity;
the third crushing knife structure includes a second coupling portion protruding downward from the processing cavity; and
the second coupling portion is coupled with the first coupling portion.

In an embodiment, a support frame is provided at a lower end of the processing cup, and a lower end of the support frame protrudes downward from a lower end of the second coupling portion.

In an embodiment, the processing cup includes a cup body and a cup cover assembly covering an opening of the cup body, a first positioning structure is provided between the cup cover assembly and the third crushing knife structure, and the first positioning structure includes a first positioning protrusion and a first positioning groove that are inserted into each other and rotatably cooperate with each other, so as to limit an axial and/or a radial movement of the third crushing knife structure.

In an embodiment, the processing cup structure further includes a second crushing knife structure rotatably installed in the processing cavity, the second crushing knife structure includes a third coupling portion extending upward from the processing cavity, the food processor further includes a drive device, a fourth coupling portion is installed on the drive device, and the fourth coupling portion is coupled with the third coupling portion.

In an embodiment, a second positioning structure is provided between a bottom of the second crushing knife structure and a bottom wall of the processing cavity, and the second positioning structure includes a second positioning protrusion and a second positioning groove that are inserted into each other and rotatably cooperate with each other, to limit axial and/or radial movement of the second crushing knife structure.

In an embodiment, the drive device includes:
a device casing formed with an installation cavity;
a power supply located in the installation cavity; and
a drive motor located in the installation cavity and electrically connected to the power supply;
the fourth coupling portion is drivingly connected to the drive motor.

In technical solutions of the present disclosure, a main machine forms a machining cavity with an opening at an upper end. A heat-conducting fluid is contained in the machining cavity. At least part of the processing cup can be detachably installed in the machining cavity from the opening of the machining cavity. A processing cavity is formed in the processing cup, and the processing cavity contains the food materials to be processed. The heating device located in the main machine heats the heat-conducting fluid in the machining cavity. After the heat-conducting fluid is heated, it is possible to conduct heat into the processing cavity, to at least heat the food material in the processing cavity, and realize the processing of the food material in the processing cavity. After processing the food material, the processing cup can be directly removed, and the food material in the processing cup can be taken out, or the food material in the processing cup is further processed, expanding the scope of the food processor to process the food material and improving the user's operating experience.

### BRIEF DESCRIPTION OF THE DRAWINGS

In order to more clearly illustrate the embodiments of the present disclosure or the technical solutions in the prior art, the following briefly introduces the accompanying drawings that need to be used in the description of the embodiments or the prior art. Obviously, the drawings in the following description are only some embodiments of the present disclosure. For those of ordinary skill in the art, other drawings can also be obtained based on the structures shown in these drawings without any creative effort.
FIG. 1 is a schematic cross-sectional structure view of a food processor according to a first embodiment of the present disclosure.
FIG. 2 is a schematic cross-sectional structure view of a processing cup structure in FIG. 1.
FIG. 3 is a schematic cross-sectional structural view of heating food materials in the processing cup structure in FIG. 1.
FIG. 4 is a partial schematic cross-sectional structural view of the processing cup structure in FIG. 1.
FIG. 5 is a partial schematic cross-sectional structural view of the processing cup structure in FIG. 1.
FIG. 6 is a schematic cross-sectional structure view of a food processor according to a second embodiment of the present disclosure.
FIG. 7 is a schematic cross-sectional structure view of a processing cup structure in FIG. 6.
FIG. 8 is a schematic cross-sectional structural view of heating the food materials in the processing cup structure in FIG. 6.
FIG. 9 is a partial schematic cross-sectional structural view of a first installation frame in FIG. 6.
FIG. 10 is a partial schematic cross-sectional structural view of the food processor in FIG. 6.
FIG. 11 is a partial schematic cross-sectional structural view of the processing cup structure in FIG. 6.
FIG. 12 is a schematic cross-sectional structure view of a food processor according to a third embodiment of the present disclosure.
FIG. 13 is a schematic cross-sectional structure view of a processing cup structure in FIG. 12.
FIG. 14 is a schematic cross-sectional structural view of heating the food materials in the food processor in FIG. 12.
FIG. 15 is a schematic cross-sectional structural view of heating the food materials in the processing cup structure in FIG. 12.
FIG. 16 is a schematic cross-sectional structural view of FIG. 12 in which an annular drainage baffle is provided in the processing cup structure to heat the food material.
FIG. 17 is a partial schematic cross-sectional structural view of a cup body in FIG. 12.
FIG. 18 is a partial schematic cross-sectional structural view of the annular drainage baffle in FIG. 12.
FIG. 19 is a schematic cross-sectional structure view of a food processor according to a fourth embodiment of the present disclosure.
FIG. 20 is a schematic cross-sectional structural view of heating the food materials in the food processor in FIG. 19.
FIG. 21 is a schematic cross-sectional structural view of the processing cup connected to the drive device in FIG. 19.
FIG. 22 is a schematic cross-sectional structural view of the processing cup structure in FIG. 19.
FIG. 23 is a schematic cross-sectional structural view of the drive device in FIG. 19.
FIG. 24 is a schematic cross-sectional structural view of the cover assembly provided on the processing cup structure in FIG. 19.
FIG. 25 is a schematic cross-sectional structural view of the first embodiment of heating the food materials in the processing cup structure in FIG. 19.
FIG. 26 is a schematic cross-sectional structural view of the second embodiment of heating the food materials in the processing cup structure in FIG. 19.
FIG. 27 is a partial schematic cross-sectional structural view of the cup body in FIG. 26.

The realization of the objective, functional characteristics, and advantages of the present disclosure are further described with reference to the accompanying drawings.

### DETAILED DESCRIPTION OF THE EMBODIMENTS

The technical solutions in the embodiments of the present disclosure will be clearly and completely described below with reference to the accompanying drawings in the embodiments of the present disclosure. Obviously, the described embodiments are only a part of the embodiments of the present disclosure, but not all of the embodiments. Based on the embodiments in the present disclosure, all other embodiments obtained by those of ordinary skill in the art without creative work fall within the protection scope of the present disclosure.

It should be noted that if there is a directional indication (such as up, down, left, right, front, rear...) in the embodiments of the present disclosure, the directional indication is only used to explain the relative positional relationship, movement, etc. of the components in a certain posture (as shown in the drawings). If the specific posture changes, the directional indication will change accordingly.

In addition, the descriptions associated with, e.g., "first" and "second," in the present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature. Besides, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present disclosure.

The fully automatic wall breaker is very popular among consumers because of its automatic slurry cleaning function. In order to expand the target group, the functions that can be implemented fully automatically are increasingly diverse. However, the fully automatic wall breaker can only automatically add and discharge flowable liquid food materials. For sticky and other non-fluid food materials that need to be heated and smashed, it will cause the difficulty of taking out the finished food materials, making the user's operation and experience unpleasant.

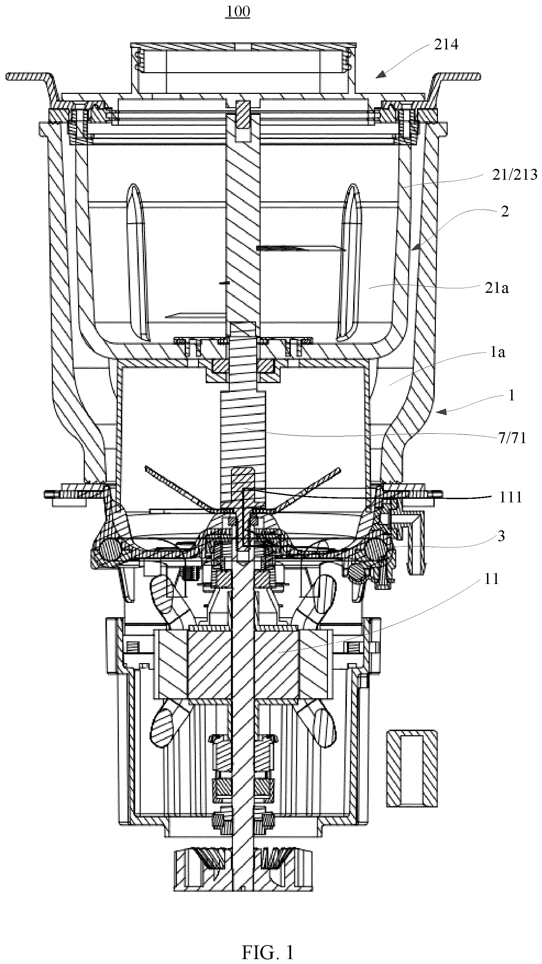

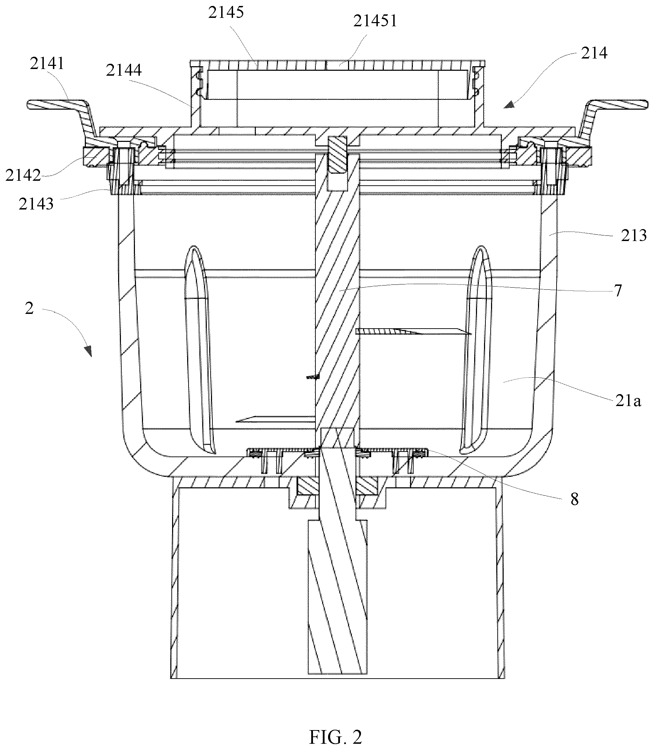

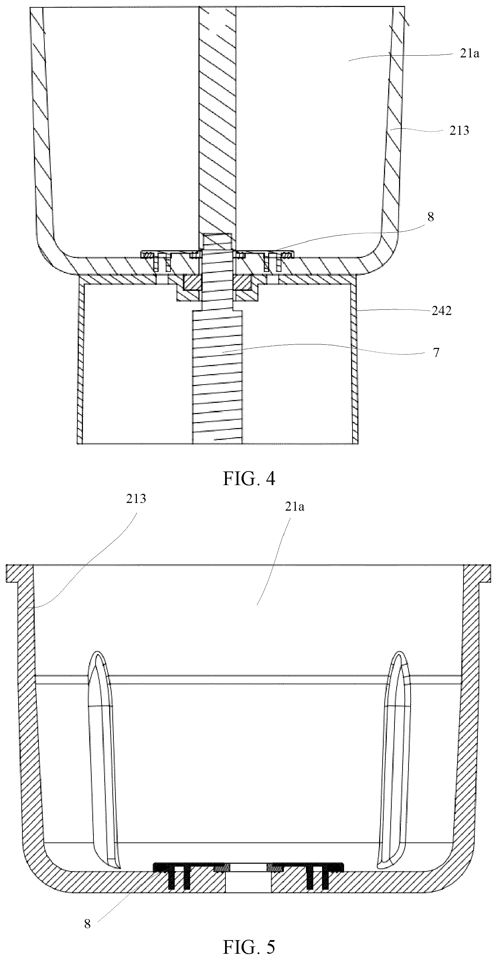

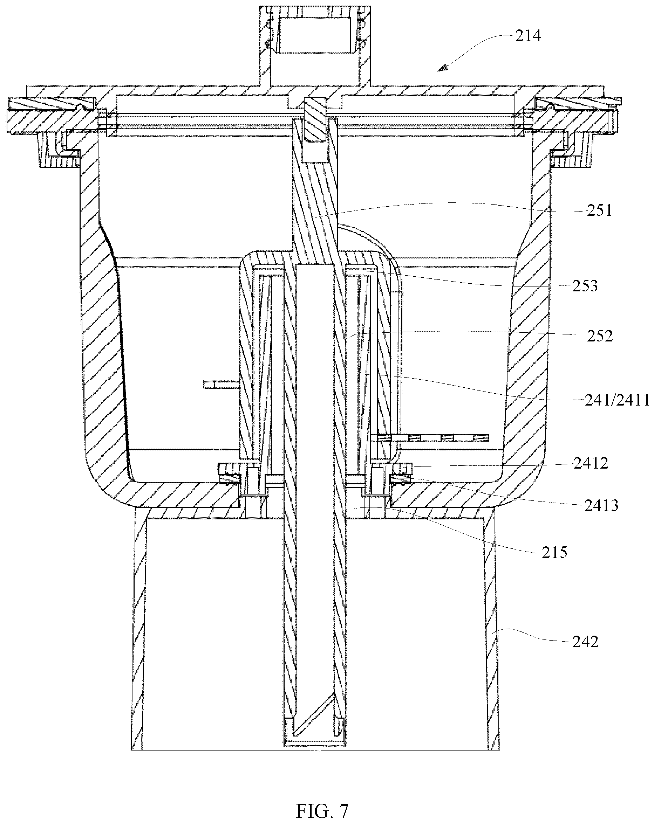

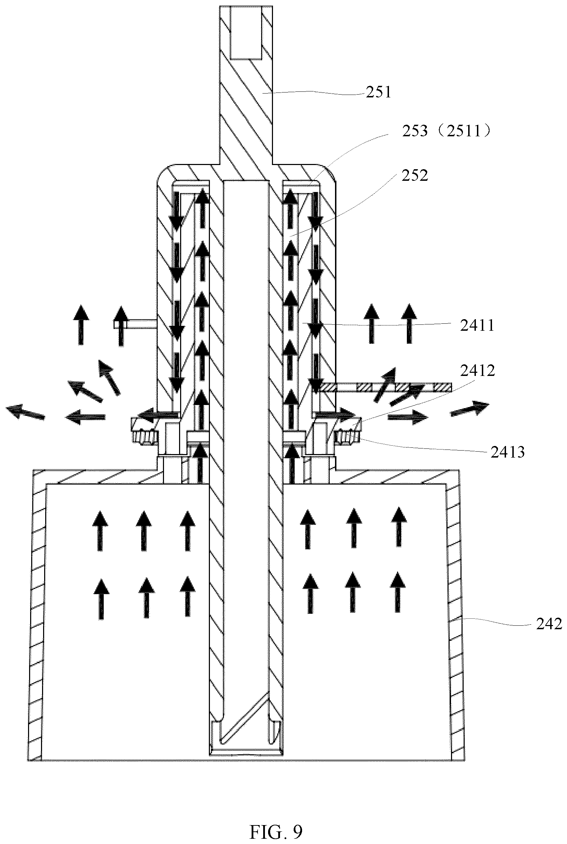

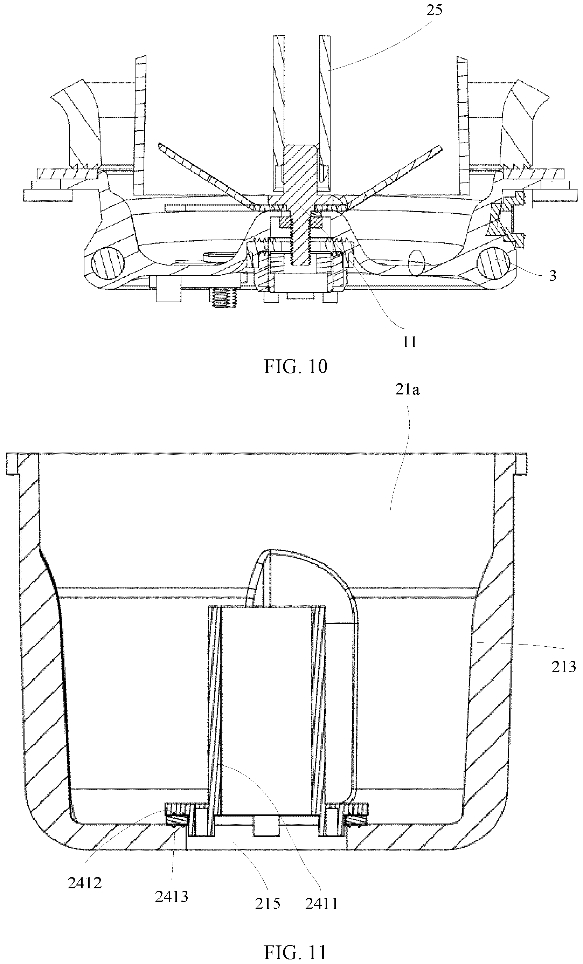

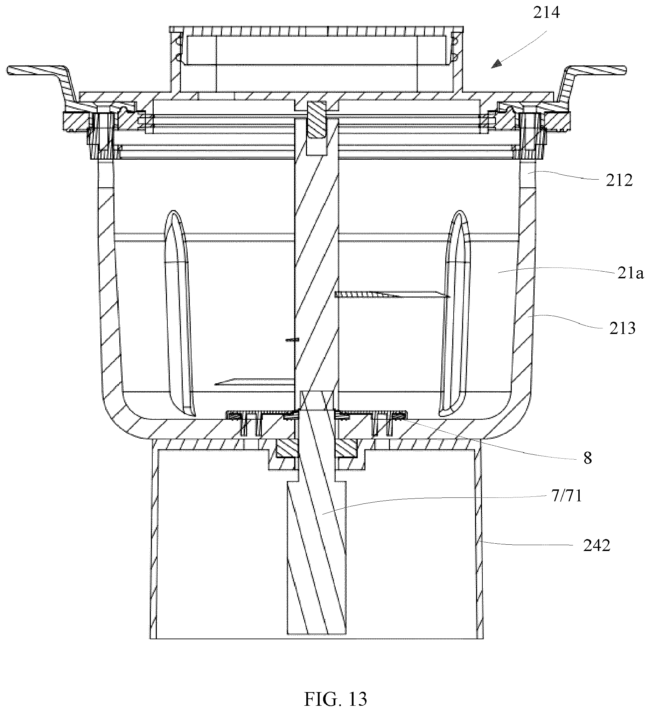

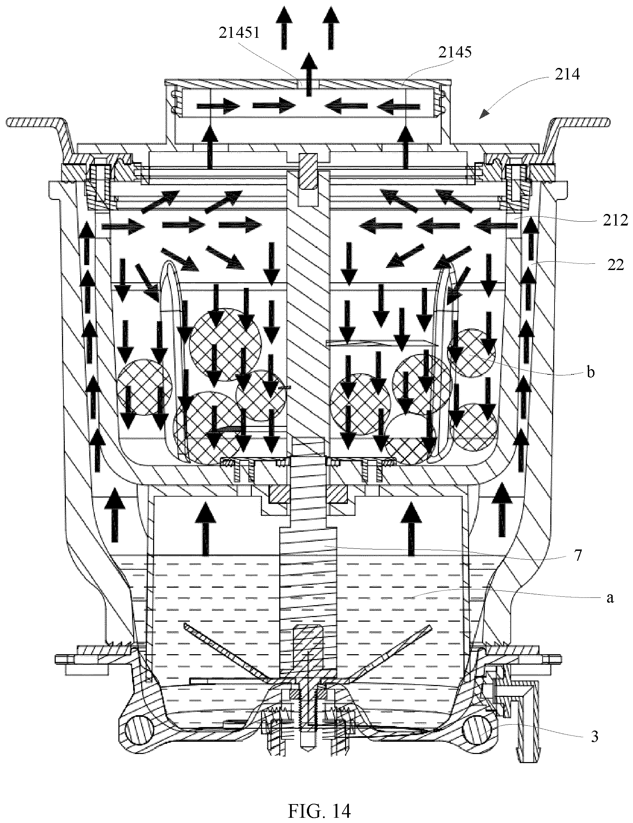

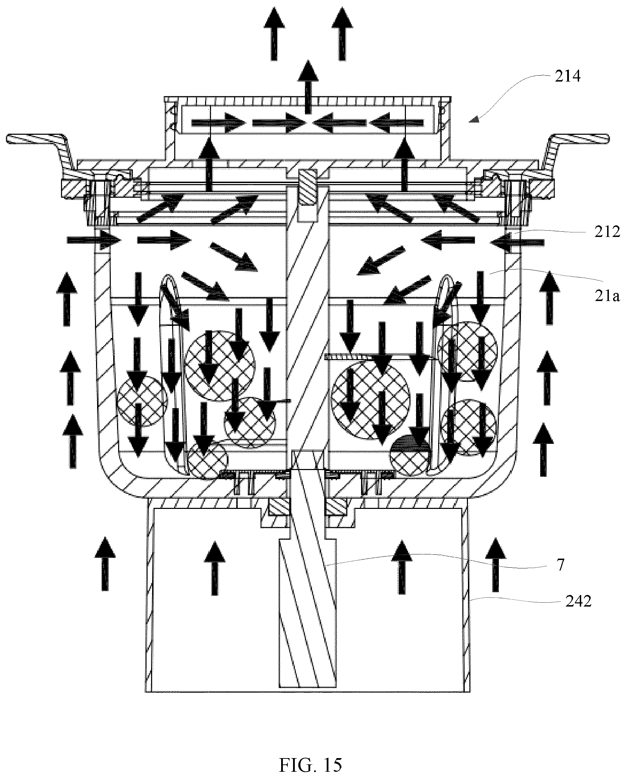

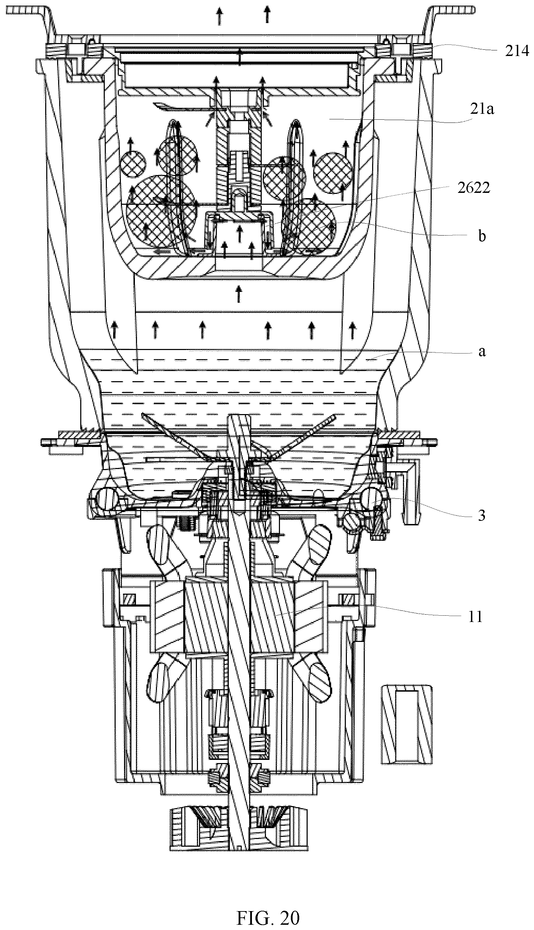

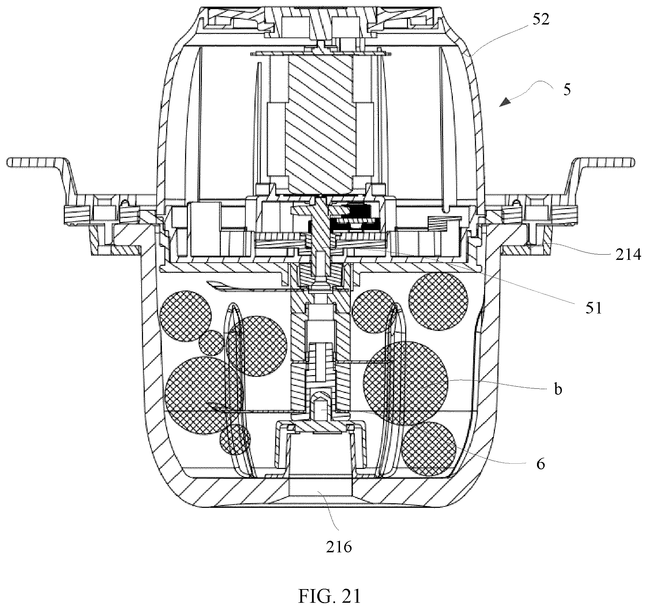

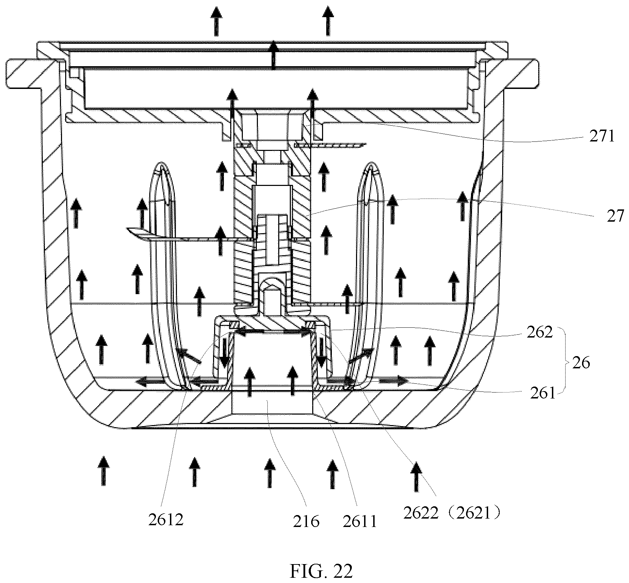

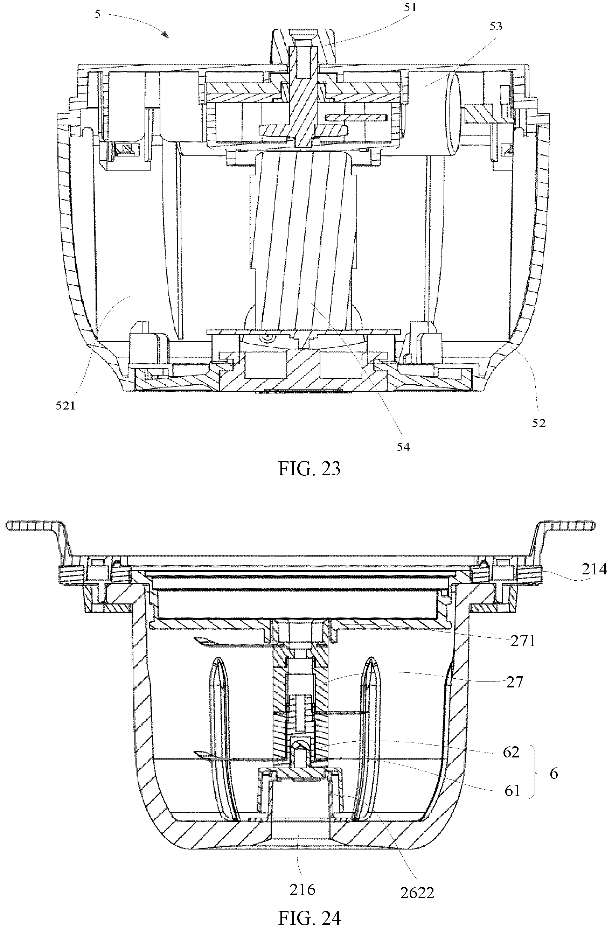

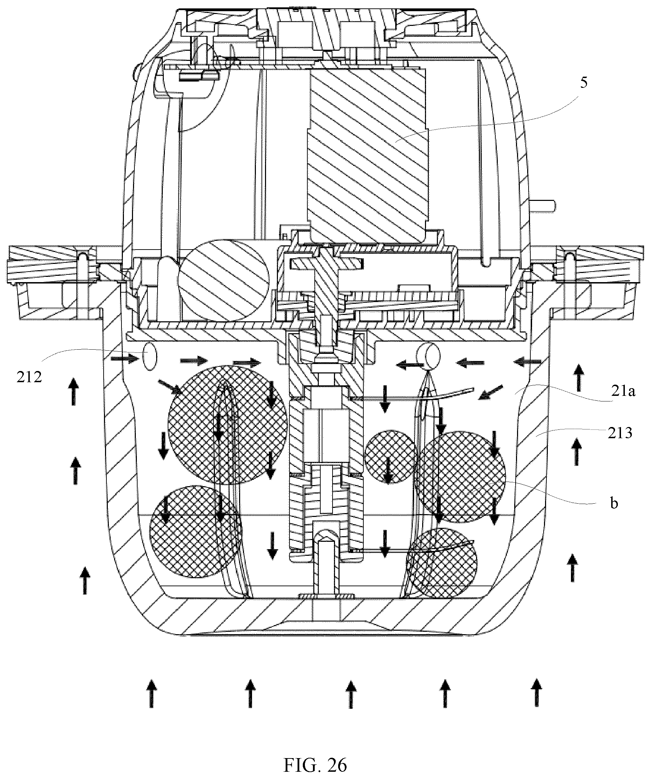

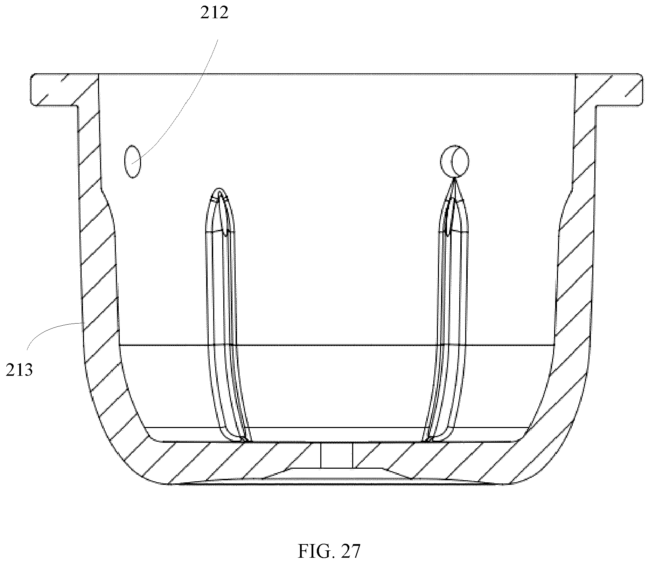

In view of this, the present disclosure provides a food processor. The present disclosure optimizes the structure of the existing food processor, improves the user experience. FIG. 1 to FIG. 27 are schematic structural diagrams of the food processor according to some embodiments of the present disclosure.

Existing food processors, such as wall breakers, etc., can process fluid food materials, such as making soy milk, fruit juice, vegetable juice and other food materials. The food processor in the present disclosure can also be used to process food materials such as mashed meat, potatoes, carrots, etc., and the above-mentioned food materials are non-fluid food materials.

As shown in FIG. 1 to FIG. 3, the food processor 100 includes a main machine 1, a processing cup structure 2, and a heating device 3.

The main machine 1 forms a machining cavity 1a with an opening at an upper end.

The processing cup structure 2 includes a processing cup 21, at least part of the processing cup 21 is detachably installed in the machining cavity 1a from the opening of the machining cavity 1a, a processing cavity 21a is formed in the processing cup 21, and the processing cavity 21 is for containing food material.

The heating device 3 is provided in the main machine 1, for heating heat-conducting fluid in the machining cavity 1a, to make the heated heat-conducting fluid conduct heat into the processing cavity 21a, to at least heat the food material in the processing cavity 21a.

In technical solutions of the present disclosure, a main machine 1 forms a machining cavity 1a with an opening at an upper end. A heat-conducting fluid is contained in the machining cavity 1a. At least part of the processing cup 21 can be detachably installed in the machining cavity 1a from the opening of the machining cavity 1a. A processing cavity 21a is formed in the processing cup 21, and the processing cavity 21a contains the food materials to be processed. The heating device 3 located in the main machine 1 heats the heat-conducting fluid in the machining cavity 1a. After the heat-conducting fluid is heated, it is possible to conduct heat into the processing cavity 21a, to at least heat the food material in the processing cavity 21a, and realize the processing of the food material in the processing cavity 21a. After processing the food material, the processing cup 21 can be directly removed, and the food material in the processing cup 21 can be taken out, or the food material in the processing cup 21 is further processed, expanding the scope of the food processor 100 to process the food material and improving the user's operating experience.

It should be noted that outside the main machine 1, the food material can be contained in the processing cup 21, the processing cup 21 is placed in the machining cavity 1a for at least heating treatment, and then the processing cup 21 is removed from the main machine 1, finally, the food material can be directly taken out from the processing cup 21, or the food material in the processing cup 21 can be further processed, such as stirring and the like.

The heating device 3 is provided in the main machine 1, and a common heating device 3 is an electromagnetic heating device 3. A magnetic conductive plate is provided in the machining cavity 1a, and the magnetic conductive plate is heated by electromagnetic heating, to heat the magnetic conductive plate. Furthermore, the heat of the magnetic conductive plate is conducted to the heat-conducting liquid in the machining cavity 1a, to heat the processing cup 21.

In other embodiments, electric heating wire heating, infrared heating and other methods may also be used.

In addition, the heat-conducting liquid mainly plays the role of heat-conducting, and it also needs to be edible, such as water, edible oil, etc. For the convenience of description, the heat-conducting liquid is described as water.

The heating of the processing cup 21 may be adding water to submerge the processing cup 21. The processing cup 21 can be heated by heating water, or after heating the water, the water phase changes into water vapor, and the processing cup 21 is heated by the water vapor. It is also possible that the water in the machining cavity 1a is directly introduced into the processing cup 21, and the food material in the processing cup 21 are directly boiled, and the above are all embodiments of the present disclosure.

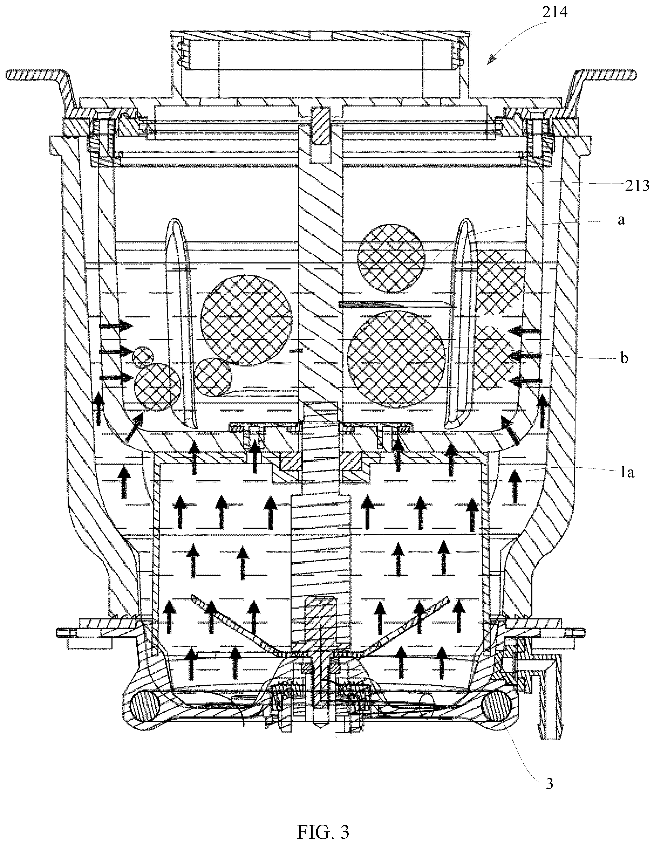

In an embodiment, as shown in FIG. 3, the food material is indicated as b, which is indicated by circular object in the figure, and the water level is indicated by a, which is indicated by dotted lines. The machining cavity 1a contains water to a certain height, and when the processing cup 21 is placed in the machining cavity 1a, the processing cup 21 is at least partially immersed in water, the cooking function of water-proof stew is realized, that is, there is no contact between water and food, and the food can also be cooked, which can reduce the loss of food nutrition and realize the diversification of food cooking.

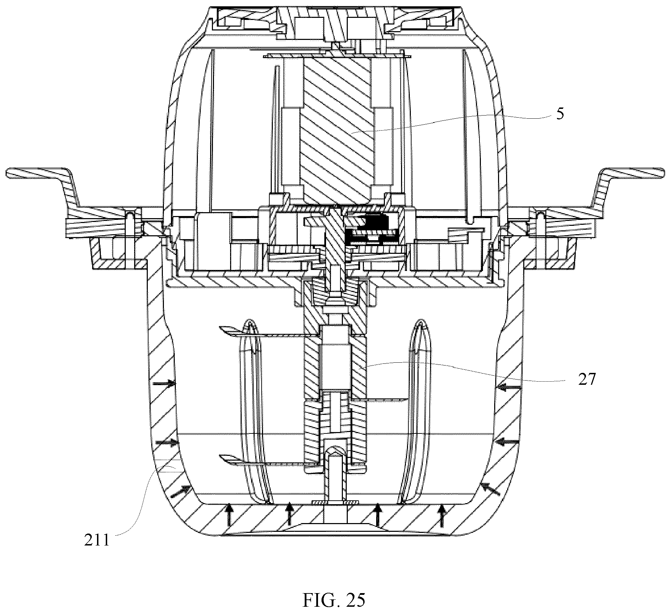

In another embodiment, as shown in FIG. 3 and FIG. 25, the water in the machining cavity 1a can be introduced into the processing cup 21 to realize the cooking function of poach. That is to say, the use of boiling water to fully exchange heat with the food material to achieve rapid aging of the food material, make full use of thermal energy, and realize the diversification of food cooking.

In an embodiment, a liquid passage hole may be provided in the part of the processing cavity 21a in contact with the water, to realize the circulation of the water in the processing cavity 21a and the machining cavity 1a. The liquid passage hole 211 may be provided on the bottom wall of the processing cavity 21a, on the side wall of the processing cavity 21a, or on the bottom wall and the side wall of the processing cavity 21a at the same time, to introduce the heat-conducting fluid in the machining cavity 1a into the processing cavity 21a, the above are all embodiments of the present disclosure.

The present disclosure does not limit the number of the liquid passage holes 211, there may be a plurality of liquid passage holes 211, such as 2, 3, 4, 5, 6, etc., provided on the bottom wall of the processing cavity 21a. The plurality of liquid passage holes 211 may be arranged in an annular shape. It is also possible to provide a plurality of liquid passage holes 211, such as 2, 3, 4, 5, 6, etc., on the side wall of the processing cavity 21a. The plurality of the liquid passage holes 211 may be arranged in an annular shape.

The cross-sectional shape of the liquid passage hole 211 is also not limited, which may be a circular hole, a square hole, a rectangular hole, or the like.

The above implementation methods all use the liquid state of the heat-conducting liquid to achieve heat transfer. In an embodiment, the heat transfer can also be realized in the gaseous state of the heat-conducting liquid. In the embodiment in which the heat-conducting liquid is water, the water has two phases, liquid state and gaseous state, and gaseous water vapor can be used to cook the food material.

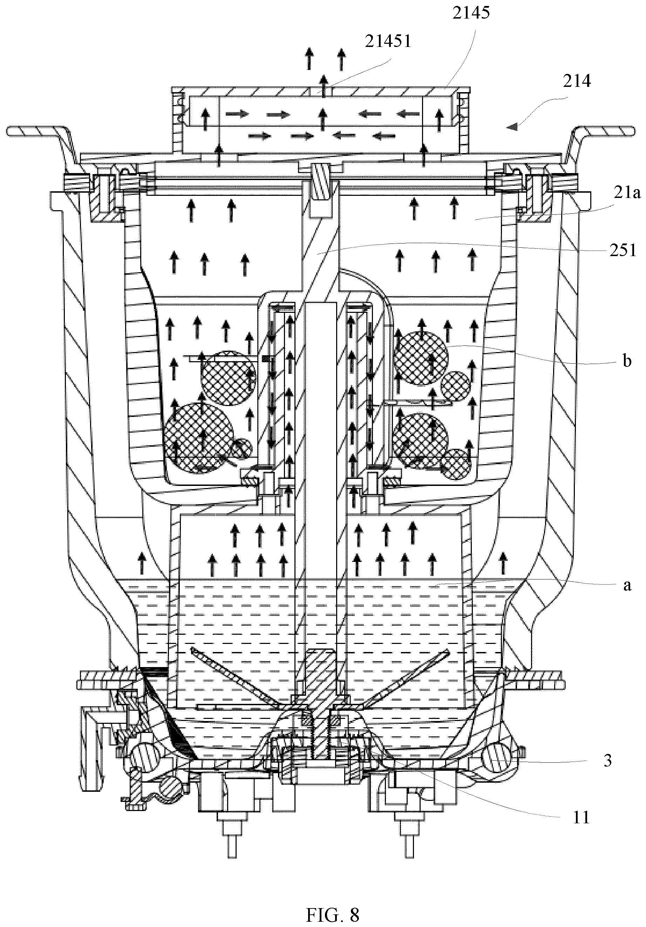

It should be noted that for this cooking method, as shown in FIG. 8, FIG. 14 and FIG. 20, the amount of water in the machining cavity 1a can be added less, and it is not necessary to submerge the processing cup 21, as long as steam can be formed, which saves water resources.

For the above cooking method of steaming, steam needs to be introduced into the processing cavity 21a to realize the contact between the steam and the food, and a steam passage is formed in the food processor 100.

The steam passage communicates the machining cavity 1a with the processing cavity 21a, and the heat transfer fluid in the machining cavity 1a is introduced into the processing cavity 21a after a phase change. By steam-cooking the food material in the processing cavity 21a, the food materials are cooked by steaming, to realize the diversification of food cooking.

In some embodiments of the present disclosure, without limiting the specific introduction route of the steam, a steam passage may be formed between the processing cup 21 and the machining cavity 1a. It is also possible to form a steam passage directly on the processing cup structure 2. It is also possible that a steam passage is formed between the processing cup 21 and the machining cavity 1a. A steam passage is also formed on the processing cup structure 2. The above are all embodiments of the present disclosure.

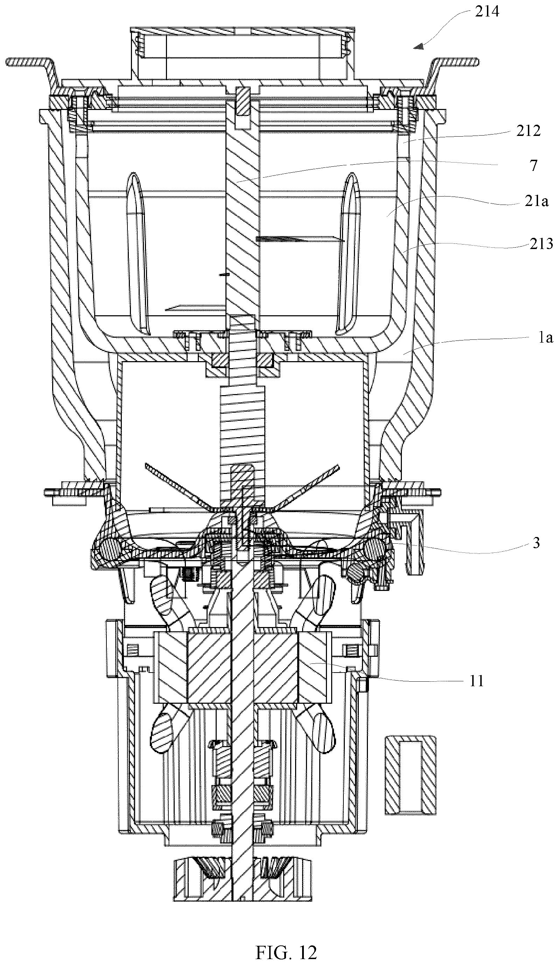

In an embodiment, as shown in FIG. 12 to FIG. 17, the steam passage is partially formed between the processing cup structure 2 and the machining cavity 1a, and is partially formed on the processing cup structure 2. That is, the gap between the processing cup 21 and the machining cavity 1a is configured to guide the airflow into the processing cavity 21a, to realize the communication of airflow between the two cavities.

In an embodiment, a first air passage hole 212 is formed through an outer side wall of the processing cup 21 at an upper end. A first annular air passage gap 22 is formed between the outer side wall of the processing cup 21 and an inner side wall of the machining cavity 1a.

The steam passage includes the first annular air passage gap 22 and the first air passage hole 212.

That is, the steam flow enters the first air passage hole 212 from the first annular air passage gap 22, and is introduced into the processing cavity 21a through the first air passage hole 212. The flow of the steam between the two cavities is realized, and by arranging the first air passage hole 212, the structure is simple, and it is convenient to quickly realize the diversion of the steam.

In some embodiments of the present disclosure, the specific number of the first air passage holes 212 is not limited, for example, it can be 2, 3, 4, 5, 6, or the like. The arrangement of the plurality of first air passage holes 212 is also not limited, which can be spaced apart along the circumferential direction of the processing cup 21, so that the steam flow in the first annular air passage gap 22 can evenly enter the processing cavity 21a from the circumferential direction, to realize the uniform circulation of steam.

In an embodiment of the present disclosure, the cross-sectional form of the first air passage hole 212 is not limited, for example, it may be a circular hole, a square hole, a rectangular hole, or the like.

The first gas passage hole 212 is provided at the upper end of the side wall of the processing cavity 21a, and the steam will directly enter the upper end of the processing cavity 21a. In order to guide more airflow to blow on the food material at the bottom, it is necessary to drain the steam airflow entering the processing cavity 21a. In an embodiment, from the outside to the inside, the first air passage holes 212 are inclined downward, that is, the airflow will enter the processing cavity 21a in a downward direction, and more steam contacts with the food material, which is convenient for sufficient heating of the food material.

The inclination angle of the first air passage hole 212 is not limited, for example, it can be any angle between 90° and 0°, for example, 89°, 88°, 87°, 86°, 85°, 84°, 83°, 82°, 81°, 80°, or the like, and can also be 1°, 2°, 3°, 4°, 5°, 6°, 7°, 8°, 9°, or the like. The above integer degrees are all within the scope of the present disclosure. Fractional degrees between any two integer degrees described above are also within the scope of the present disclosure.

In an embodiment, it is also possible to install a guide tube obliquely downward in the processing cavity 21a, and the outlet of the guide tube is further directed downward to further guide the airflow to the bottom of the processing cavity 21a, to achieve further guide flow. The installation of the guide tube cannot affect the stirring in the processing cavity 21a.

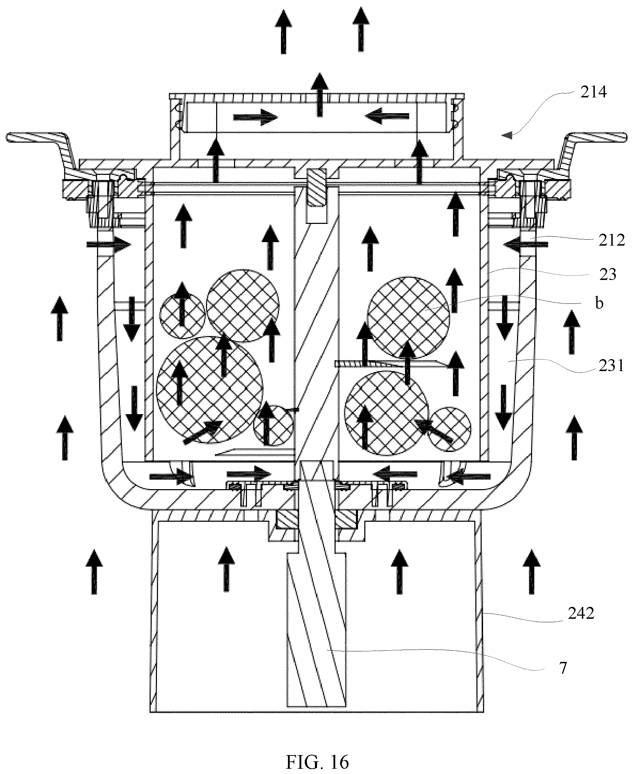

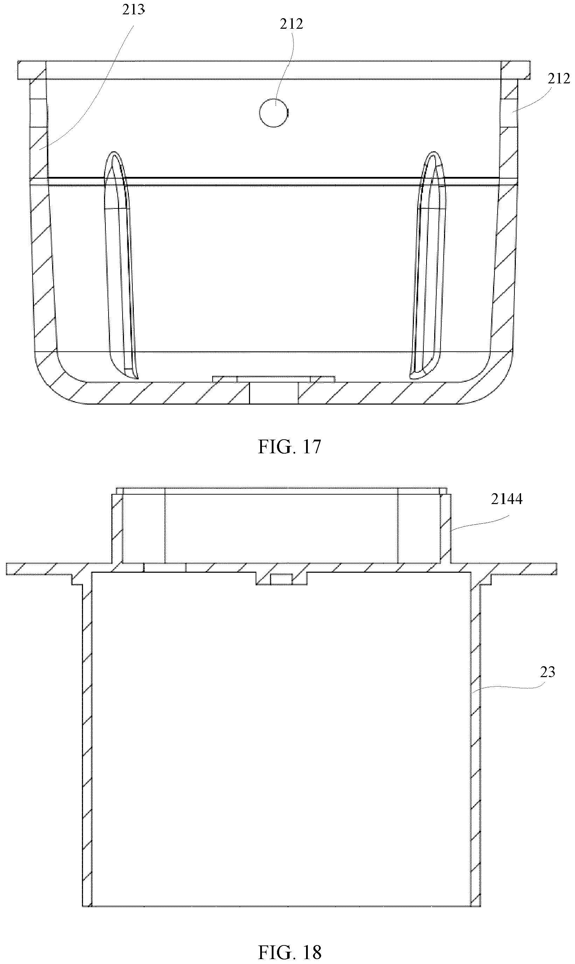

In another embodiment, it is also possible to set a flow guide structure in the processing cavity 21a. As shown in FIG. 16 and FIG. 18, an annular drainage baffle 23 is provided in the processing cavity 21a, and the upper end of the annular drainage baffle 23 is provided on a top wall surface of the processing cavity 21a. A lower end of the annular drainage baffle 23 is spaced from a bottom wall of the processing cavity 21a to form a second annular air passage gap 231 communicating with the first air passage hole 212 between the outer side wall of the annular drainage baffle 23 and the inner side wall of the processing cavity 21a, to guide the steam flow to the bottom of the processing cavity 21a. That is, the steam flow introduced from the first air passage hole 212 is above the processing cavity 21a, then, the steam flow is fully in contact with the food material entering the bottom of the processing cavity 21a and the bottom wall of the processing cavity 21a in the second annular air passage gap 231, then, the steam flow rises from the bottom of the processing cavity 21a to the entire processing cavity 21a, to fully stew the food material in the processing cavity 21a.

The length of the annular drainage baffle 23 directly determines the depth to which the steam can be introduced into the processing cavity 21a. Setting the annular drainage baffle 23 as long as possible can limit the distance between the lower end surface of the annular drainage baffle 23 and the bottom wall surface of the processing cavity 21a, which can be 1 mm, 2 mm, 3 mm, 4 mm, 5 mm and so on.

In an embodiment, the annular drainage baffle 23 is provided with a first ventilation hole, steam can be introduced from the bottom of the processing cavity 21a, steam can also be introduced from the middle of the processing cavity 21a to facilitate simultaneous steam cooking of the bottom food material and the middle food material in the processing cavity 21a, which has a better effect.

The number of the first ventilation holes is not limited, which can be 2, 3, 4, 5, 6, or the like. The arrangement of the plurality of first ventilation holes is also not limited, which can be spaced apart along the circumferential direction of the annular drainage baffle 23, so that the steam flow in the second annular air passage gap 231 can evenly and fully contact the food material at different heights from the circumferential direction, to facilitate uniform curing.

The annular drainage baffle 23 may be disposed on the side wall of the processing cavity 21a, or may be disposed on the top wall of the processing cavity 21a. In an embodiment, the processing cup includes a cup body 213 and a cup cover assembly 214. The cup body 213 is provided with an opening at an upper end. The cup cover assembly 214 is covered on an open end of the cup body 213 to form the processing cavity 21a with the cup body 213.

The annular drainage baffle 23 is provided at a lower end of the cup cover assembly 214 and is integrally formed with the cup cover assembly 214.

That is, the annular drainage baffle 23 is provided at the lower end of the cup cover assembly 214. When the cup cover assembly 214 is separated from the cup body 213, the annular drainage baffle 23 is also taken out from the cup body 213, and it is convenient for the packing of food material. In addition, there is no need to provide a sealing structure on the top of the processing cavity 21a, to reduce the leakage of the steam flow from the top of the processing cavity 21a.

When the cup cover assembly 214 is a plastic part, the annular drainage baffle 23 is also a plastic part, the cup cover assembly 214 and the annular drainage baffle 23 may be integrally formed, for example, injection-molded by the same injection mold.

In another embodiment, the steam passage is formed on the processing cup structure 2, that is, the steam passage can be better arranged, and it is easier for the steam to enter from the bottom of the processing cavity 21a.

In some embodiments, after heating and curing the food material in the processing cavity 21a, it is also necessary to whip the food material in the processing cavity 21a. It is common that the stirring structure is provided in the middle of the processing cavity 21a, therefore, the steam passage can be provided on the stirring structure.

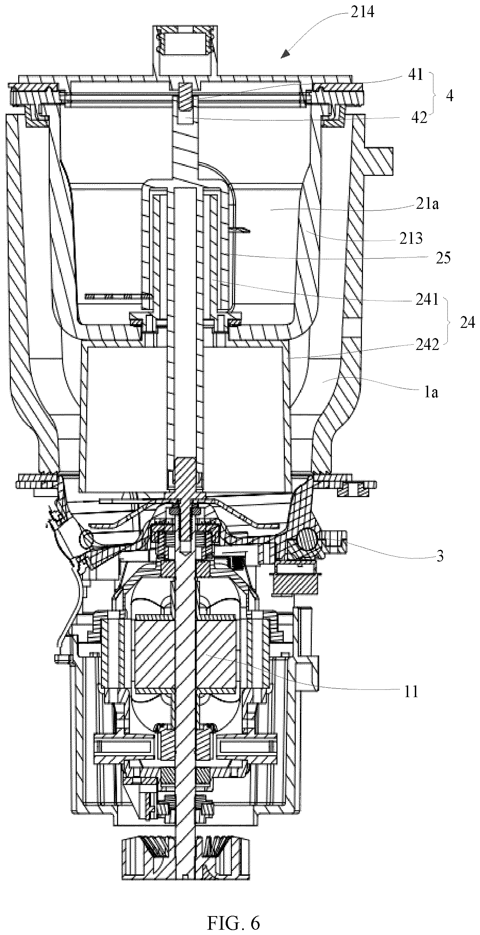

In an embodiment, as shown in FIG. 6 to FIG. 11, a bottom of the processing cup 21 is provided with a mounting hole 215, and the processing cup structure 2 further includes a first installation frame 24 and a first crushing knife structure 25.

The first installation frame 24 is provided in the mounting hole 215.

An upper end of the first crushing knife structure 25 is rotatably mounted on the first installation frame 24, and is located in the processing cavity 21a for crushing the food material in the processing cavity 21a, and a lower end of the first crushing knife structure 25 is extending out of the processing cavity 21a to be drivingly connected to a main machine drive assembly 11.

The steam passage is formed between the first installation frame 24 and the first crushing knife structure 25.

That is, the steam passage is formed between the first installation frame 24 and the first crushing knife structure 25, to easily arrange the steam passage.

The first crushing knife structure 25 is used for stirring the food material in the processing cavity 21a, and the first crushing knife structure 25 includes a stirring shaft and a stirring blade. When the stirring shaft is driven to rotate, the stirring blade rotates to stir the food material in the processing cavity 21a, so that the food materials are finely crushed.

In an embodiment of the present disclosure, the shape, number and arrangement of the stirring blades are not limited, which can be 2, 3, 4, 5, 6, or the like, and can be evenly spaced along the circumferential direction of the stirring shaft, and so on.

Further, in an embodiment, the first installation frame 24 includes a center support 241, a lower end of the center support 241 is provided in the mounting hole 215, and an upper end of the center support 241 is formed with a first annular protrusion 2411 located in the processing cavity 21a and extending upward.

The first crushing knife structure 25 includes a first knife body mounting seat 251, the first knife body mounting seat 251 is formed with a first annular groove 2511 with an opening facing downward, the first knife body mounting seat 251 is rotatably mounted on the center support 241.

The first annular protrusion 2411 is inserted into the first annular groove 2511, a thickness of the first annular protrusion 2411 is smaller than a width of the first annular groove 2511, to form two vertical annular air passage gaps 252 spaced apart between the first annular protrusion 2411 and the first annular groove 2511, a top of the first annular protrusion 2411 is spaced apart from a bottom wall of the first annular groove 2511, to form a horizontal annular air passage gap 253 between a top of the first annular protrusion 2411 and a bottom wall of the first annular groove 2511, the horizontal annular air passage gap 253 is communicated with the two vertical annular air passage gaps 252.

The steam passage includes the horizontal annular air passage gap 253 and the two vertical annular air passage gaps 252.

That is, a steam passage is formed in the processing cavity 21a. The steam flow first circulates upward, then downward, and finally flows in from the bottom of the processing cavity 21a, to fully ripen the food.

A stirring structure can be provided on the side surface of the first knife body mounting seat 251, for example, a stirring blade is screwed, a stirring blade is welded, and the like.

The method of forming the first annular groove 2511 on the first knife body mounting seat 251 may be a method of machining, or a method of integral casting.

Bearings can be provided on the mounting holes 215, the first knife body mounting seat 251 can be provided on the bearing, to realize the rotational installation between the first knife body mounting seat 251 and the center support 241.

Besides, it should be noted that a thickness of the first annular protrusion 2411 and a width of the first annular groove 2511 directly determine a width of the vertical annular air passage gap 252. In an embodiment, the width of the vertical annular air passage gap 252 can be 1 mm, 2 mm, 3 mm, 4 mm, 5 mm, or the like, or a decimal gap less than 1 mm, or a decimal gap between the above-mentioned integer gaps, or the like.

The horizontal annular air passage gap 253 can be set to 1 mm, 2 mm, 3 mm, 4 mm, 5 mm, or the like, or a decimal gap less than 1 mm, or a decimal gap between the above-mentioned integer gaps, and so on.

The food materials are distributed on the lateral width of the processing cavity 21a, to increase the lateral diffusion of the steam flow in the middle. In an embodiment, the first knife body mounting seat 251 further includes an annular guide rib protruding from the outer side wall of the first annular groove 2511 and extending laterally to guide the steam flow laterally, that is, to extend the steam passage. In this way, the steam flow can be directed to the position of the processing cavity 21a near the side wall in the lateral direction, and the food material can be cooked more fully and uniformly.

Further, a second ventilation hole is provided through the annular guide rib. That is to say, in the steam passage, not only can the air be sprayed horizontally, but also can be sprayed upwards, and the stewing is carried out in the processing cavity 21a in multiple directions and at multiple angles, and the food can be cooked more uniformly.

It should be noted that, there may be a plurality of second ventilation holes, and the number is not limited, which can be 2, 3, 4, 5, 6, and so on.

The layout of the plurality of second ventilation holes is also not limited, which can be spaced apart along the circumferential direction of the annular guide ribs. In this way, it is convenient for the food material in the circumferential direction of the processing cavity 21a to fully contact the steam, and the cross-sectional shape of the second ventilation hole is also not limited, which can be circular, square, rectangular or triangular and so on.

In other embodiments, the plurality of second ventilation holes are configured as ventilation groups, and the ventilation groups are spaced apart along the width direction of the annular guide rib, and the food can be cooked more uniformly.

In other embodiments, each of the second ventilation holes inclines, and the inclination angles are different, which is convenient for the airflow blowing toward the food materials from various angles, and the food materials can be cooked more uniformly.

In some embodiments, the outer side wall of the first annular groove 2511 is provided with a plurality of second air passage holes, that is, the air is directly discharged laterally at the vertical annular air passage gap 252, and the horizontally distributed food materials can be fully cooked.

It should be noted that the number of the second through holes is not limited, which can be 2, 3, 4, 5, 6, and so on.

The layout of the plurality of second air passage holes is also not limited, which can be spaced apart along the circumferential direction of the first annular groove 2511, so that the food material in the circumferential direction of the processing cavity 21a can be fully contacted with steam.

The cross-sectional shape of the second air passage hole is also not limited, which can be circular, square, rectangular or triangular and so on.

In some other embodiments, a plurality of second air passage holes are configured as air passage groups. The air passage groups are spaced apart in the up-down direction, and uniform ripening of food materials with different height distributions can be achieved.

In other embodiments, each of the second air passage holes inclines, and the inclination angles are different, and the airflow is blown toward the food materials from various angles, so that the food materials can be cooked more uniformly.

The center support 241 is provided in the mounting hole 215. In order to reduce the leakage of steam from the center support 241, in an embodiment, an annular crimping protrusion 2412 is protruded from the side surface of the center support 241. A first sealing ring 2143 is provided between the annular crimping protrusion 2412 and the bottom wall of the processing cavity 21a, and the risk of leakage of steam from the center support 241 is reduced.

The upper end surface and/or the lower end surface of the first sealing ring 2143 is provided with a first annular interference rib. When the center support 241 is provided on the processing cup 21, the deformation of the first annular interference rib prolongs the steam leakage path, and further improves the sealing performance.

In an embodiment of the present disclosure, the number of the first annular interference ribs is not limited, which can be 2, 3, 4, 5, 6, and so on.

The cross-sectional shape of the first annular interference rib is also not limited, which can be circular, square, rectangular or triangular and so on.

The first sealing ring 2143 may be made of materials such as rubber or plastic.

The center support 241 is provided in the mounting hole 215, and the center support 241 can be directly connected to the inner wall of the processing cavity 21a, such as by adhesive connection, screw connection, and the like.

In an embodiment, the first installation frame 24 includes a center support 241 and a support frame 242.

A lower end of the center support 241 is formed with a first connection portion provided in the mounting hole 215, and an upper end of the center support 241 is located in the processing cavity 21a.

An upper end of the support frame 242 is formed with a second connection portion provided in the mounting hole 215, the second connection portion is detachably connected to the first connection portion, and the support frame 242 is for at least supporting and installing the processing cup 21 in the machining cavity 1a.

The first crushing knife structure 25 is rotatably mounted on the upper end of the center support 241.

That is, the center support 241 is clamped with the support frame 242, the center support 241 is indirectly installed in the mounting hole 215, and the connection structure on the inner wall of the processing cavity 21a is reduced, which facilitates the installation of the processing cup 21.

The second connection portion is detachably connected to the first connection portion, which can be a screw connection, or a snap connection, or the like. In the embodiment in which the second connection portion is screwed with the first connection portion, the second connection portion is provided with a first connection hole. The first connection portion is provided with a second connection hole, and the inner wall of the second connection hole is provided with an inner thread. The threaded connection structure includes a locking bolt, and the threaded end of the locking bolt is inserted through the first connection hole. The thread is locked in the second connection hole to realize the locking of the second connection portion and the first connection portion.

In an embodiment, the first connection hole, the second connection hole and the locking bolt are arranged in a one-to-one correspondence as a locking group, and the locking groups are provided in multiples and are arranged at intervals along the circumferential direction of the mounting hole 215.

In an embodiment, as shown in FIG. 12 and FIG. 18, a bottom of the processing cup 21 is provided with a through hole 216, and the processing cup structure further includes a second installation frame 26 and a second crushing knife structure 27.

The second installation frame 26 is provided in the processing cavity and corresponding to the through hole 216.

The second crushing knife structure 27 is rotatably mounted on the second installation frame 26, and an upper end of the second crushing knife structure 27 is for extending upwards from the processing cavity 21a and is drivingly connected to an external drive device 5.

The steam passage is formed on the second installation frame 26.

That is, in this embodiment, the drive power of the stirring structure placed in the processing cavity 21a is installed above, and the steam passage is only formed on the second installation frame 26, which is convenient for the arrangement of the steam passage.

The second crushing knife structure 27 is used for stirring the food materials in the processing cavity 21a. The second crushing knife structure 27 includes a stirring shaft and a stirring blade. When the stirring shaft is driven to rotate, the stirring blade rotates to stir the food materials in the processing cavity 21a, and the food materials are finely crushed.

In an embodiment of the present disclosure, the shape, number and arrangement of the stirring blades are not limited, which can be 2, 3, 4, 5, 6, or the like, and can be evenly spaced along the circumferential direction of the stirring shaft, and so on.

Further, in an embodiment, the second installation frame includes a through hole bracket 261 and a positioning bracket 262.

The through hole bracket 261 is provided in the processing cavity 21a, the through hole bracket 261 is formed with a second annular protrusion 2611 around a periphery of the through hole 216, and an outer side wall of the second annular protrusion 2611 is provided with a third air passage hole 2612.

The positioning bracket 262 is provided in the processing cavity 21a, the second crushing knife structure 27 is rotatably mounted on the positioning bracket 262, a lower end of the positioning bracket 262 is formed with a buckle groove 2621 with an opening downward, a top wall surface of the buckle groove 2621 is in contact with an upper end surface of the second annular protrusion 2611, a groove width of the buckle groove 2621 is larger than an outer diameter of the second annular protrusion 2611, to form a third annular air passage gap 2622 between an outer side wall of the second annular protrusion 2611 and an inner side wall of the buckle groove 2621.

The steam passage includes the through hole 216, an inner cavity of the second annular protrusion 2611 and the third annular air passage gap 2622.

That is, the third annular air passage gap 2622 is formed on the through hole bracket 261 and the positioning bracket 262, and the steam in the machining cavity 1a is also introduced into the processing cavity 21a, to achieve uniform ripening of the food materials.

The through hole bracket 261 is provided in the processing cavity 21a, and may be provided on the bottom wall of the processing cavity 21a using a screw connection structure or an adhesive structure.

It should be noted that the number of the third air passage holes 2612 is not limited, which can be 2, 3, 4, 5, 6, and so on.

The layout of the plurality of third air passage holes 2612 is also not limited, which may be spaced apart along the circumferential direction of the second annular protrusion 2611, and the food materials in the circumferential direction of the processing cavity 21a can be fully contacted with steam.

The cross-sectional shape of the third air passage hole 2612 is also not limited, which can be circular, square, rectangular or triangular and so on.

In addition, it should be noted that, the distance between the inner side wall of the buckle groove 2621 and the outer side wall of the first annular protrusion 2411 directly determines the width of the third annular air passage gap 2622. In an embodiment, the width of the third annular air passage gap 2622 can be set to 1 mm, 2 mm, 3 mm, 4 mm, 5 mm, or the like, or may be a decimal gap less than 1 mm, or a decimal gap between the above-mentioned integer gaps, or the like.

In another embodiments, the outer side wall of the buckle groove 2621 is provided with a third ventilation hole. That is to say, in the steam channel, not only can the air blow at the bottom, but also in the middle of the processing cavity 21a to steam and cook the food in the processing cavity 21a in multiple directions and at multiple angles, and the food can be cooked more evenly.

It should be noted that there are a plurality of third ventilation holes, and the number is not limited, which can be 2, 3, 4, 5, 6, and so on.

The layout of the plurality of the third ventilation holes is also not limited, which can be spaced apart along the circumferential direction of the buckle grooves 2621, so that the food material in the circumferential direction of the processing cavity 21a can be fully contacted with steam.

The cross-sectional shape of the third ventilation hole is also not limited, which can be circular, square, rectangular or triangular and so on.

In other embodiments, a plurality of third ventilation holes are arranged as ventilation groups, and the ventilation groups are spaced apart in the up-down direction, so that the food can be cooked more uniformly.

In other embodiments, each of the third ventilation holes inclines, and the inclination angles are different, so that the airflow is blown toward the food materials from all angles, so that the food materials can be cooked more uniformly.

In order to facilitate taking out the food material from the processing cavity 21a, in an embodiment, the processing cup 21 includes a cup body 213 and a cup cover assembly 214.

The upper end of the cup body 213 is open.

The cup cover assembly 214 covers at least the open end of the cup body 213 to form the processing cavity 21a together with the cup body 213.

That is, the cup cover assembly 214 is removed, and after the food materials are contained in the processing cavity 21a, the cup cover assembly 214 is installed again. After the food materials in the processing cup 21 are processed, the cup cover assembly 214 is opened again to quickly take out the food materials.

In an embodiment, the cup cover assembly includes a handle frame 2141, a cup mouth sealing ring 2142, a lower handle cover 2143, and a cup cover 2144.

The handle frame 2141 is formed with an opening in a middle.

The cup mouth sealing ring 2142 is provided on a lower end surface of the handle frame 2141, a lower end surface of the cup mouth sealing ring 2142 is in sealing contact with a lip of the opening of the processing cavity 21a and a lip of the opening of the machining cavity 1a respectively.

The lower handle cover 2143 is provided on the lower end surface of the cup mouth sealing ring 2142, and the lower handle cover 2143 is located between the cup body 213 and the machining cavity 1a.

The cup cover 2144 is covered on the opening of the handle frame.

That is, the cup cover assembly 214 also seals the opening of the machining cavity 1a, and when steam is generated in the machining cavity 1a, the leakage of the steam is reduced.

The handle frame 2141 is provided to facilitate the quick removal of the processing cup 21 and the quick separation of the cup cover assembly 214 from the cup body 213 after the food in the processing cavity 21a is processed.

It should be noted that the cup mouth sealing ring 2142, the handle lower cover 2143 and the handle frame 2141 are connected together by a screw connection structure.

Besides, it should be noted that the upper end of the cup body 213 has a ringshaped clamping protrusion protruding outwards. An annular clamping groove is formed between the cup mouth sealing ring 2142, the handle lower cover 2143 and the handle frame 2141. The annular clamping protrusion is arranged in the annular clamping groove, that is, the cup cover assembly 214 is fixed on the cup body 213. When a person holds the handle frame 2141, the processing cup structure 2 can be moved.

The lower end surface of the cup mouth sealing ring 2142 is provided with a second annular interference rib. The tightness between the cup cover assembly 214 and the opening of the processing cavity 21a is further enhanced by the deformation of the second annular interference rib.

In an embodiment of the present disclosure, the specific number of the second annular interference ribs is not limited, which can be 2, 3, 4, 5, 6, and so on.

The cross-sectional shape of the second annular interference rib is also not limited, which can be circular, square, rectangular or triangular and so on.

It should be noted that in a powered up embodiment, the cup cover 2144 is also provided with an opening for the driving part of the drive device 5 to extend into and drive to connect with the stirring structure provided in the processing cavity 21a. In the powered down type embodiment, the cup cover 2144 can be set to be closed, and a steam valve 2145 is set on the cup cover 2144 for discharging steam.

The cup cover assembly 214 includes a steam valve 2145, the steam valve 2145 communicates with the processing cavity 21a, and is provided with an outlet hole 21451 for discharging the steam in the processing cavity 21a. By setting the form of the steam valve 2145, the leakage of steam can be reduced, and the safety of cooking is also ensured.

It should be noted that the air outlet hole 21451 may be provided on the top of the steam valve 2145, or may be provided on the side of the steam valve 2145, and the above are all embodiments of the present disclosure.

The cross-sectional shape of the air outlet hole 21451 is also not limited, which can be circular, square, rectangular or triangular and so on.

The food materials in the processing cavity 21a may only be heated and cooked, or the food materials in the processing cavity 21a may be further stirred on the basis of heating and curing. No stirring structure is provided in the processing cavity 21a, and the external stirring structure can be directly inserted into the processing cavity 21a for stirring. It can also be a method of setting a stirring structure in the processing cup 21 to drive the stirring structure. The main machine drive assembly 11 provided in the machining cavity 1a may be used, or the external drive device 5 may be used, and the above are all embodiments of the present disclosure.

In the embodiment using a powered down, as shown in FIG. 1 to FIG. 5, the main machine 1 includes a main machine drive assembly 11 for stirring the food materials in the machining cavity 1a. The main machine drive assembly 11 includes a first coupling portion 111 extending into the machining cavity 1a.

The processing cup structure 2 further includes a third crushing knife structure 7 rotatably installed in the processing cavity 21a. The third crushing blade structure 7 includes a second coupling portion 71 that can protrude downward from the processing cavity 21a, and the second coupling portion 71 can be coupled with the first coupling portion 111.

That is, the main machine drive assembly 11 of the main machine 1 is used to realize the rotation of the third crushing knife structure 7, which reduces the layout of the drive assembly and saves the cost.

The first crushing knife structure 25 that can form a steam channel together with the first installation frame 24 can also be powered down to realize the power coupling between the main machine drive assembly 11 and the first crushing knife structure 25.

It should be noted that the main machine drive assembly 11 is a drive assembly in the main machine 1, and mainly realizes the rotation of the stirring structure in the processing cavity 1a, for example, processing fluid food materials.

Generally, the main machine driving assembly 11 is disposed at the bottom of the main machine 1, and the first coupling portion 111 penetrates upward from the bottom of the main machine 1 into the processing cavity 21a.

In addition, for the coupling method, the opposite end surfaces of the first coupling portion 111 and the second coupling portion 71 are provided with mutually matching anti-rotation grooves and anti-rotation protrusions, to realize that it can be movably inserted in the axial direction and transmit torque in the circumferential direction.

The present disclosure does not limit the specific cross-sectional forms of the anti-rotation grooves and the anti-rotation protrusions, as long as they are non-circular, which can be square, rectangular, semi-circular, and the like.

In the above embodiments, in order to facilitate the installation of the third crushing knife structure 7, a first through hole is provided on the bottom wall of the processing cavity 21a. A sealing installation structure 8 is provided on the bottom wall of the processing cavity 21a. The sealing installation structure 8 is provided with a second through hole corresponding to the first through hole. The first through hole and the second through hole are used for the third crushing knife structure 7 to be installed.

The sealing installation structure 8 includes a sealing installation frame, the sealing installation frame is detachably installed with the support frame 242 through a screw connection structure, and a sealing structure is provided on the sealing installation frame and the inner wall of the processing cavity 21a.

The sealing installation frame is provided with threaded connection holes, the bottom wall of the processing cavity 21a is provided with through holes, and the support frame 242 is provided with placement holes. The threaded end of the locking bolt passes through the through hole from the placement hole, and is threadedly locked in the threaded connection hole.

The locking bolts, the placement holes, the via holes and the threaded connection holes are arranged in a one-to-one correspondence as a connection group, and the connection groups are provided in multiples and are arranged at intervals along the circumferential direction of the processing cavity 21a.

The outer end of the sealing installation frame is bent downward to form an annular seating groove with an opening facing downward, and a second sealing ring is arranged in the annular seating groove to seal the upper end of the via hole.

The upper end surface and the lower end surface of the second sealing ring are provided with third annular interference ribs. The tightness between the sealing installation frame and the processing cavity 21a is further enhanced by the deformation of the third annular interference rib.

In the embodiments of the present disclosure, the specific number of the third annular interference ribs is not limited, which can be 2, 3, 4, 5, 6, and so on.

The cross-sectional shape of the third annular interference rib is also not limited, which can be circular, square, rectangular or triangular and so on.

A third sealing ring is also arranged in the first through hole, and the first through hole is arranged in steps to form an upwardly arranged stepped surface. The third sealing ring is arranged between the stepped surface and the lower end surface of the sealing installation frame.

The upper and lower end surfaces of the third sealing ring are provided with fourth annular interference ribs. Through the deformation of the fourth annular interference rib, the sealing performance between the sealing installation frame and the first through hole is further increased.

In the embodiments of the present disclosure, the specific number of the fourth annular interference ribs is not limited, which can be 2, 3, 4, 5, 6, and so on.

The cross-sectional shape of the fourth annular interference rib is also not limited,

which can be circular, square, rectangular or triangular and so on.

The upper end of the support frame 242 is partially recessed to form a groove, and a bottom wall of the groove is provided with a third through hole for the third crushing knife structure 7 to be penetrated and installed.

A fourth sealing ring is provided between the outer bottom wall of the processing cavity 21a and the bottom wall surface of the groove to seal the gap between the support frame 242 and the third through hole.

In one embodiment, a support frame 242 is provided at the lower end of the processing cup 21, and the lower end of the support frame 242 is arranged to protrude downward from the lower end of the second coupling portion 71.

That is, when the processing cup 21 is moved out of the processing cavity 21a, the processing cup structure 2 can be directly placed on the cooking table, which facilitates the placement of the processing cup structure 2.

It should be noted that the lower end surface of the support frame 242 is flat, and the processing cup structure 2 can be placed stably when the processing cup structure 2 is placed on the cooking table.

It should be noted that the height of the lower end of the support frame 242 protruding downward from the lower end of the second coupling portion 71 is not limited, which can be set to 1 mm, 2 mm, 3 mm, 4 mm, 5 mm, etc., or which can be a decimal gap less than 1mm, or a decimal gap between the above-mentioned integer gaps, and so on.

In one embodiment, the processing cup 21 includes a cup body 213 and a cup cover assembly 214 covering the opening of the cup body 213.

A first positioning structure 4 is provided between the cup cover assembly 214 and the third crushing knife structure 7. The first positioning structure 4 includes a first positioning protrusion 41 and a first positioning groove 42 that are inserted into each other and are rotated and matched with each other, to limit the axial and/or radial movement of the third crushing knife structure 7.

That is, the axial and/or radial movement of the third crushing blade structure 7 can be restricted by the first positioning structure 4, to reduce the vibration of the third crushing knife structure 7 transmitted to the processing cup 21, the vibration of the entire food processor 100 is reduced.

In order to reduce the wear between the first positioning protrusion 41 and the first positioning groove 42, the materials of the first positioning protrusion 41 and the first positioning groove 42 can be set to be different. The first positioning groove 42 may be made of metal, and the first positioning convex portion 41 may be made of plastic or rubber or the like.

In the case that the first positioning protrusion 41 and the first positioning groove 42 are both made of metal material, the first positioning groove 42 may be made of steel or iron with relatively high hardness, and the first positioning protrusion 41 may be made of a soft material such as copper.

In the present disclosure, the cross-sectional shapes of the first positioning protrusion 41 and the first positioning groove 42 are both set to be circular. In addition, in order to better limit the third crushing knife structure 7 in the axial direction, the length of the first positioning protrusion 41 is greater than the depth of the first positioning groove 42, that is, in the up-down direction, it is pressed against the third crushing knife structure 7 to achieve axial limit.

The first crushing knife structure 25, which can form a steam channel together with the first installation frame 24, can also use the first positioning structure 4, to reduce the vibration of the first crushing knife structure 25 transmitted to the processing cup 21, and the vibration of the entire food processor 100 is reduced.

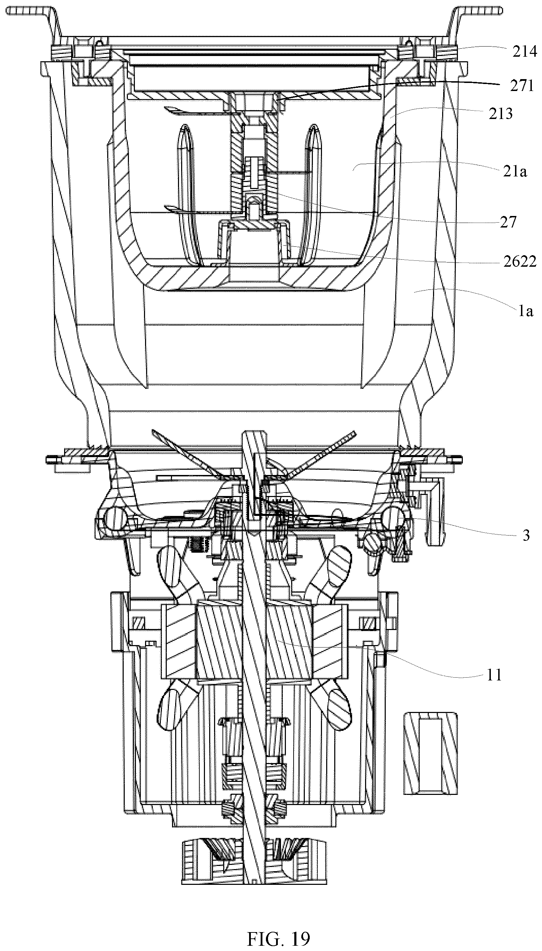

In an embodiment, as shown in FIG. 19 to FIG. 27, the processing cup structure 2 further includes a second crushing knife structure 27 rotatably installed in the processing cavity 21a The second crushing knife structure 27 includes a third coupling portion 271 that can protrude upward from the processing cavity 21a.

The food processor 100 further includes a drive device 5, and a fourth coupling portion 51, which is rotatably mounted, is formed on the drive device 5, and the fourth coupling portion 51 can be coupled with the third coupling portion 271.

That is, using the external drive device 5 to realize the stirring of the second crushing knife structure 27 can simplify the setting method of the processing cup structure 2 and have a good effect.

For the coupling method, the opposite end surfaces of the third coupling portion 271 and the fourth coupling portion 51 are provided with mutually matching anti-rotation grooves and anti-rotation protrusions, to realize that it can be movably inserted in the axial direction and transmit torque in the circumferential direction.

In one embodiment, a second positioning structure 6 is provided between the bottom of the second crushing knife structure 27 and the bottom wall of the processing cavity 21a. The second positioning structure 6 includes a second positioning protrusion 61 and a second positioning groove 62 that are inserted into each other and are rotated and matched with each other, to limit the axial and/or radial movement of the second crushing knife structure 27.

That is, the axial and/or radial movement of the second crushing knife structure 27 can be restricted by the second positioning structure 6, to reduce the vibration of the second crushing knife structure 27 transmitted to the processing cup 21, and the vibration of the entire food processor 100 is reduced.

In order to reduce the wear between the second positioning protrusion 61 and the second positioning groove 62, the materials of the second positioning protrusion 61 and the second positioning groove 62 can be set to be different. The second positioning groove 62 may be made of metal, and the second positioning convex portion 61 may be made of plastic or rubber or the like.

In the case that both the second positioning protrusion 61 and the second positioning groove 62 are made of metal material, the second positioning groove 62 may be made of steel or iron with a relatively high hardness, and the second positioning protrusion 61 may be made of a soft material such as copper.

In the present disclosure, the cross-sectional shapes of the second positioning protrusions 61 and the second positioning grooves 62 are both set to be circular. In addition, in order to better limit the second crushing knife structure 27 in the axial direction, the length of the second positioning protrusion 61 is greater than the depth of the second positioning groove 62, that is, in the up-down direction, it presses against the second crushing knife structure 27 to achieve axial limit.

In one embodiment, the drive device 5 includes a device housing 52, a power source 53 and a drive motor 54.

The device housing 52 is formed with an installation cavity 521, the power supply 53 is provided in the installation cavity 521, and the drive motor 54 is provided in the installation cavity 521 and is electrically connected to the power supply 53.

The fourth coupling portion 51 is drivingly connected to the drive motor 54.

That is, the drive device 5 can be directly coupled with the fourth coupling portion 51 to realize torque transmission, thereby realizing the rotation of the second crushing knife structure 27, and further realizing the processing in the processing cavity 21a.

It should be noted that the power source 53 may be a rechargeable mobile power source, which is convenient to take and use, so as to be charged at one time and used for a long period of time.

The power source 53 can also be directly connected to an indoor AC power source, and the indoor AC power source can directly drive the drive motor 54 to rotate.

In an embodiment, the indoor AC power supply can be converted into a DC power supply, and the DC motor can be driven by the DC power supply, thereby driving the rotation of the second crushing knife structure 27. The above are all embodiments of the present disclosure.

The above are only some embodiments of the present disclosure, and do not limit the scope of the present disclosure thereto. Under the inventive concept of the present disclosure, equivalent structural transformations made according to the description and drawings of the present disclosure, or direct/indirect application in other related technical fields are included in the scope of the present disclosure.

## Claims

1. A food processor (100) comprising:
a main machine (1) forming a machining cavity (1a) with an opening at an upper end of the main machine (1);
a processing cup structure (2) comprising a processing cup (21), at least part of the processing cup (21) being detachably installed in the machining cavity (1a) from the opening of the machining cavity (1a), and a processing cavity (21a) being formed in the processing cup (21) for containing a food material; and
a heating device (3) provided in the main machine (1) for heating a heat-conducting fluid in the machining cavity (1a), the heat-conducting fluid after heated being able to conduct heat into the processing cavity (21a), so as to at least heat the food material in the processing cavity (21a).

2. The food processor (100) of claim 1, wherein the processing cup (21) is at least partially submerged in the heat-conducting fluid, and/or wherein a bottom wall and/or a side wall of the processing cavity (21a) is provided with a liquid passage hole (211) to introduce the heat-conducting fluid in the machining cavity (1a) into the processing cavity (21a).

3. The food processor (100) of claim 1 or 2, wherein a steam passage is formed in the food processor (100), wherein the steam passage is in communication with the machining cavity (1a) and the processing cavity (21a), such that after a phase change of the heat-conducting fluid, the heat-conducting fluid in the machining cavity (1a) is introduced into the processing cavity (21a), so as to steam and cook the food material in the processing cavity (21a).

4. The food processor (100) of claim 3, wherein the steam passage is partially formed between the processing cup structure (2) and the machining cavity (1a), and partially formed on the processing cup structure (2).

5. The food processor of claim 4, wherein a first air passage hole (212) is formed to run through an outer side wall of the processing cup (21) at an upper end of the processing cup (21), wherein a first annular air passage gap (22) is formed between the outer side wall of the processing cup (21) and an inner side wall of the machining cavity (1a), and wherein the steam passage comprises the first annular air passage gap (22) and the first air passage hole (212), wherein a plurality of first air passage holes (212) preferably are provided and preferably are spaced apart from each other along a circumferential direction of the processing cup (21); and/or, wherein in a direction from outside to inside, the first air passage hole (212) preferably is inclined downward.

6. The food processor (100) of claim 5, wherein an annular drainage baffle (23) is provided in the processing cavity (21a), wherein an upper end of the annular drainage baffle (23) is provided on a top wall surface of the processing cavity (21a), wherein a lower end of the annular drainage baffle (23) is spaced from a bottom wall of the processing cavity (21a), and forms a second annular air passage gap (231) communicating with the first air passage hole (212) between an outer side wall of the annular drainage baffle (23) and an inner side wall of the processing cavity (21a), so as to direct a steam flow to a bottom of the processing cavity (21a).

7. The food processor (100) of claim 6, wherein the processing cup (21) comprises:
a cup body (213) with an opening at an upper end of the cup body (213); and
a cup cover assembly (214) covered on the open end of the cup body (213) to form the processing cavity (21a) together with the cup body (213);
wherein the annular drainage baffle (23) is provided at a lower end of the cup cover assembly (214) and is integrally formed with the cup cover assembly (214).

8. The food processor (100) of any one of claims 3, wherein the steam passage is formed on the processing cup structure (2).

9. The food processor (100) of claim 8, wherein a bottom of the processing cup (21) is provided with a mounting hole (215), and wherein the processing cup structure (2) further comprises:
a first installation frame (24) provided in the mounting hole (215); and
a first crushing knife structure (25), an upper end of the first crushing knife structure (25) being rotatably mounted on the first installation frame (24) and located in the processing cavity (21a) for crushing the food material in the processing cavity (21a), a lower end of the first crushing knife structure (25) extending out of the processing cavity (21a) to be drivingly connected to a main machine drive assembly (11);
wherein the steam passage is formed between the first installation frame (24) and the first crushing knife structure (25).

10. The food processor (100) of claim 9, wherein:
the first installation frame (24) comprises a center support (241), a lower end of the center support (241) is provided in the mounting hole (215), and an upper end of the center support (241) is formed with a first annular protrusion (2411) located in the processing cavity (21a) and extending upward;
the first crushing knife structure (25) comprises a first knife body mounting seat (251), the first knife body mounting seat (251) is formed with a first annular groove (2511) with an opening facing downward, the first knife body mounting seat (251) is rotatably mounted on the center support (241);
the first annular protrusion (2411) is inserted into the first annular groove (2511), a thickness of the first annular protrusion (2411) is smaller than a width of the first annular groove (2511), so as to form two vertical annular air passage gaps (252) spaced apart from each other between the first annular protrusion (2411) and the first annular groove (2511), wherein a top of the first annular protrusion (2411) is spaced apart from a bottom wall of the first annular groove (2511), so as to form a horizontal annular air passage gap (253) between a top of the first annular protrusion (2411) and the bottom wall of the first annular groove (2511), the horizontal annular air passage gap (253) is communicated with the two vertical annular air passage gaps (252); and
wherein the steam passage comprises the horizontal annular air passage gap (253) and the two vertical annular air passage gaps (252), wherein an outer side wall of the first annular groove (2511) preferably is provided with a plurality of second air passage holes; and/or wherein the first knife body mounting seat (251) further preferably comprises an annular guide rib protruding from the outer side wall of the first annular groove (2511) and extending laterally to guide the steam flow laterally; and/or wherein an annular crimping protrusion (2412) preferably is protruded on a side surface of the center support (241), and wherein a first sealing ring (2143) preferably is provided between the annular crimping protrusion (2412) and the bottom wall of the processing cavity (21a).

11. The food processor (100) of claim 9, wherein the first installation frame (24) comprises:
a center support (241), a lower end of the center support (241) being formed with a first connection portion provided in the mounting hole (215), an upper end of the center support (241) being located in the processing cavity (21a); and
a support frame (242), an upper end of the support frame (242) being formed with a second connection portion provided in the mounting hole (215), the second connection portion being detachably connected to the first connection portion, the support frame (242) being for at least supporting and installing the processing cup (21) in the machining cavity (1a);
wherein the first crushing knife structure (25) is rotatably mounted on the upper end of the center support (241).

12. The food processor (100) of claim 8, wherein a bottom of the processing cup (21) is provided with a through hole (216), and wherein the processing cup structure (2) further comprises:
a second installation frame (26) provided in the processing cavity (21a) and corresponding to the through hole (216); and
a second crushing knife structure (27) rotatably mounted on the second installation frame (26), an upper end of the second crushing knife structure (27) being for extending upwards from the processing cavity (21a) and being drivingly connected to an external drive device;
wherein the steam passage is formed on the second installation frame (26), wherein the second installation frame (26) preferably comprises:
a through hole bracket (261) provided in the processing cavity (21a), the through hole bracket (261) being formed with a second annular protrusion (2611) around a periphery of the through hole (216), an outer side wall of the second annular protrusion (2611) being provided with a third air passage hole (2612); and
a positioning bracket (262) provided in the processing cavity (21a), the second crushing knife structure (27) being rotatably mounted on the positioning bracket (262), a lower end of the positioning bracket (262) being formed with a buckle groove (2621) with an opening downward, a top wall surface of the buckle groove (2621) being in contact with an upper end surface of the second annular protrusion (2611), a groove width of the buckle groove (2621) being larger than an outer diameter of the second annular protrusion (2611), so as to form a third annular air passage gap (2622) between the outer side wall of the second annular protrusion (2611) and an inner side wall of the buckle groove (2621);
wherein the steam passage preferably comprises the through hole (216), an inner cavity of the second annular protrusion (2611) and the third annular air passage gap (2622).

13. The food processor (100) of claim 1, wherein the processing cup (21) comprises:
a cup body (213) with an opening at an upper end of the cup body (213); and
a cup cover assembly (214) at least covered on the open end of the cup body (213) to form the processing cavity (21a) with the cup body (213), wherein the cup cover assembly (214) preferably comprises:
a handle frame (2141) formed with an opening in a middle of the handle frame (2141);
a cup mouth sealing ring (2142) provided on a lower end surface of the handle frame (2141), a lower end surface of the cup mouth sealing ring (2142) being in sealing contact with a lip of an opening of the processing cavity (21a) and a lip of the opening of the machining cavity (1a) respectively;
a lower handle cover (2143) provided on the lower end surface of the cup mouth sealing ring (2142), the lower handle cover (2143) being located between the cup body (213) and the machining cavity (1a); and
a cup cover (2144) covered on the opening of the handle frame (2141); and/or wherein the cup cover assembly (214) preferably comprises a steam valve (2145) communicating with the processing cavity (21a), and wherein the steam valve (2145) preferably is provided with an air outlet hole (21451) for discharging steam in the processing cavity (21a).

14. The food processor (100) of claim 1, wherein:
the main machine (1) comprises a main machine drive assembly (11) for stirring the food material in the machining cavity (1a);
the main machine drive assembly (11) comprises a first coupling portion (111) extending into the machining cavity (1a);
the processing cup structure (2) further comprises a third crushing knife structure (7) rotatably installed in the processing cavity (21a);
the third crushing knife structure (7) comprises a second coupling portion (71) protruding downward from the processing cavity (21a); and
the second coupling portion (71) is coupled with the first coupling portion (111), wherein a support frame (242) preferably is provided at a lower end of the processing cup (21), and wherein a lower end of the support frame (242) preferably protrudes downward from a lower end of the second coupling portion (71); and/or, wherein the processing cup (21) preferably comprises a cup body (213) and a cup cover assembly (214) covering an opening of the cup body (213), wherein a first positioning structure (4) preferably is provided between the cup cover assembly (214) and the third crushing knife structure (7), and wherein the first positioning structure (4) preferably comprises a first positioning protrusion (41) and a first positioning groove (42) that are inserted into each other and rotatably cooperate with each other, so as to limit an axial and/or a radial movement of the third crushing knife structure (7).

15. The food processor (100) of claim 1, wherein the processing cup structure (2) further comprises a second crushing knife structure (27) rotatably installed in the processing cavity (21a), wherein the second crushing knife structure (27) comprises a third coupling portion (271) extending upward from the processing cavity (21a),
wherein the food processor (100) further comprises a drive device (5), wherein a fourth coupling portion (51) is installed on the drive device (5), and wherein the fourth coupling portion (51) is coupled with the third coupling portion (271); wherein a second positioning structure preferably is provided between a bottom of the second crushing knife structure (27) and a bottom wall of the processing cavity (21a), and wherein the second positioning structure preferably comprises a second positioning protrusion (61) and a second positioning groove (62) that are inserted into each other and rotatably cooperate with each other, so as to limit an axial and/or a radial movement of the second crushing knife structure (27), and/or wherein the drive device (5) preferably comprises:
a device casing formed with an installation cavity (521);
a power supply (53) located in the installation cavity (521); and
a drive motor (54) located in the installation cavity (521) and electrically connected to the power supply (53);
wherein the fourth coupling portion (51) preferably is drivingly connected to the drive motor (54).
